# EUROPÄISCHE PATENTANMELDUNG

(11) **EP 2 732 867 A1**
(43) Veröffentlichungstag der Anmeldung: **21.05.2014**
(21) Anmeldenummer: 13185403.6
(22) Anmeldetag: 20.09.2013
(51) Int. Cl.: B01D 53/56, F23J 7/00, B01D 53/50

(54) **Verfahren und Mehrstoffdüse zur Reduktion unerwünschster Substanzen in einem Rauchgas**

(30) Priorität: 14.11.2012 DE 102012110962
(71) Anmelder: Babcock Borsig Steinmüller GmbH, 46049 Oberhausen (DE)
(72) Erfinder: Hamel, Stefan, Dr., 57482 Wenden (DE); Storm, Christian, Dr., 47249 Duisburg (DE)
(74) Vertreter: Cohausz & Florack

(57) **Zusammenfassung**

Dargestellt und beschrieben ist ein Verfahren zur Reduktion unerwünschter Substanzen durch Eindüsen eines Reaktionsmittels in ein Rauchgas (18) eines Dampferzeugers. Damit die Reaktionsmittel auch in größeren Dampferzeugern und/oder Feuerräumen eingesetzt werden können, wird ein Verfahren vorgeschlagen, bei dem das Reaktionsmittel (6) über eine Reaktionsmittelöffnung (7) einer Mehrstoffdüse (1) in den Feuerraum (3) des Dampferzeugers eingedüst wird, bei dem durch wenigstens eine außerhalb der Reaktionsmittelöffnung (7) angeordnete Umhüllungsmittelöffnung (14) ein Umhüllungsmittel (15) in den Feuerraum (3) eingedüst wird und bei dem das Umhüllungsmittel (15) das Reaktionsmittel (6) im Feuerrum (3) wenigstens teilweise umhüllt und so das Reaktionsmittel (6) zumindest teilweise vom Rauchgas (18) abschirmt.

## Beschreibung

Die Erfindung betrifft ein Verfahren zur Reduktion unerwünschter Substanzen durch Eindüsen eines Reaktionsmittels in ein Rauchgas eines Dampferzeugers, bei dem das Reaktionsmittel über eine Reaktionsmittelöffnung einer Mehrstoffdüse in den Feuerraum des Dampferzeugers eingedüst wird. Ferner betrifft die Erfindung eine Mehrstoffdüse für das Eindüsen von Reaktionsmittel in einen Feuerraum eines Dampferzeugers zur Reduktion unerwünschter Substanzen im Rauchgas, mit einer Reaktionsmittelzuführung zur Zuführung eines Reaktionsmittels wobei feuerraumseitig die Reaktionsmittelzuführung in einer Reaktionsmittelöffnung mündet. Letztlich betrifft die Erfindung auch einen Feuerraum eines Dampferzeugers mit einer solchen Mehrstoffdüse.

Es sind bereits Verfahren und Vorrichtungen der zuvor genannten Art bekannt. Bei den Reaktionsmitteln handelt es sich beispielsweise um Ammoniak und/oder Harnstoff, welche den Anteil an Stickoxiden im Rauchgas mindern können. Entsprechende Verfahren werden als selektive nichtkatalytische Reduktion SNCR (selective non-catalytic reduction) bezeichnet. Typischerweise wird der Ammoniak und/oder Harnstoff in einer wässrigen Lösung an einer Stelle in den Feuerraum eingedüst, wo eine Temperatur zwischen 850°C und 1000°C herrscht und eine der folgenden Reaktionen abläuft:

4 NH₃ + 4 NO + O₂ → 4N₂ + 6 H₂O

NH₂CONH₂ + 2 NO + ½ O₂ → 2 N₂ + CO₂ + 2 H₂O

Hierzu werden unterschiedliche Düsentypen verwendet, die entweder in der Wand des Feuerraums integriert sind oder in Form von Lanzen in den Feuerraum hineinragen. Die Lanzen können einen Düsenstock tragen, um das Reaktionsmittel nicht nur punktförmig, sondern mittels einer Vielzahl von Öffnungen über den Querschnitt des Feuerraums verteilt zuzugeben. Die Verwendung entsprechender Lanzen hat den Nachteil der Ascheablagerung und der Korrosion, da die Lanzen dem Rauchgas und den hohen Rauchgastemperaturen ausgesetzt sind. Außerdem sind bei größeren Feuerräumen sehr lange Lanzen und aufwändige Düsenstöcke erforderlich, um eine zufriedenstellende Vermischung des Rauchgases mit dem Reaktionsmittel zu erreichen, ohne etwa einen erhöhten Ammoniakschlupf in Kauf zu nehmen. Lange Lanzen können zudem zu unerwünschten Schwingungen angeregt werden. Außerdem müssen die Lanzen zuverlässig gekühlt werden. Zudem müssen diese bei vertikaler Ausrichtung durch über dem Feuerraum vorgesehene Wärmetauscher hindurchgeführt werden, so dass ein Nachrüsten bestehender Anlagen als Folge sinkender Grenzwerte kaum möglich ist. Horizontale und vertikale Lanzen können zwar zu Wartungszwecken aus dem Feuerraum herausgezogen werden, sofern diese rohrförmig ausgebildet sind, decken dann aber einen geringeren Feuerraumquerschnitt ab.

In der Wand des Feuerraums eingelassene Düsen haben den Nachteil einer geringen Eindringtiefe. Diese kann durch Verwendung von sogenannten Zweistoffdüsen gesteigert werden. Den Zweistoffdüsen wird typischerweise Ammoniak und/oder Harnstoff in wässriger Lösung zugeführt. Die Lösung wird dann über eine zentrale Öffnung in den Feuerraum abgegeben. Konzentrisch um diese Öffnung herum ist eine Ringöffnung vorgesehen, durch die zusätzlich ein Treibmittel eingedüst wird. Als Treibmittel werden meist Gase, insbesondere Luft, verwendet. Die Luft tritt dabei so schnell aus der Düse aus, dass sie das Reaktionsmittel in den Feuerraum mitreißt und das Reaktionsmittel vernebelt. Es bilden sich also feine Tröpfchen des Reaktionsmittels.

Die Eindringtiefe ist zwar bei Zweistoffdüsen mit flüssigen Reaktionsmitteln größer als wenn gasförmiges Ammoniak eingedüst würde. Allerdings ist die Eindringtiefe für große Dampferzeuger bzw. große Feuerräume nicht ausreichend, da die feinen Tröpfchen des Reaktionsmittels vom Rauchgas mitgerissen und aufgrund der hohen Temperatur schnell verdampft werden. Wird die Austrittsgeschwindigkeit des Treibmittels gesteigert, kann zwar auch die Geschwindigkeit der Tröpfchen gesteigert werden, was die Eindringtiefe theoretisch erhöhen sollte. Allerdings nimmt dann auch die Tropfengröße ab und wird mehr Rauchgas vom Treibmittelstrahl angesaugt, so dass die Tröpfchen schneller verdampfen und so die Eindringtiefe tatsächlich nicht nennenswert gesteigert werden kann. Das Reaktionsmittel gelangt also nur bei kleineren Feuerräumen in die Nähe der Feuerraummitte, so dass das Rauchgas über den gesamten Querschnitt des Feuerraums mit dem Reaktionsmittel in Kontakt kommen kann. Zweistoffdüsen können auch an Lanzen im Feuerraum angebracht werden, sind dann aber ebenfalls Ablagerungen und Korrosion ausgesetzt.

Daher liegt der Erfindung die Aufgabe zugrunde, das Verfahren, die Mehrstoffdüse und den Feuerraum jeweils der eingangs genannten und zuvor näher beschriebenen Art derart auszugestalten und weiterzubilden, dass die Reaktionsmittel auch in größeren Dampferzeugern und/oder Feuerräumen eingesetzt werden können, ohne dass ein unzureichendes Vermischen von Rauchgas und Reaktionsmittel auftritt oder übermäßig Reaktionsmittel eingesetzt werden muss.

Diese Aufgabe ist gemäß Anspruch 1 durch ein Verfahren gelöst, bei dem durch wenigstens eine außerhalb der Reaktionsmittelöffnung angeordnete Umhüllungsmittelöffnung ein Umhüllungsmittel in den Feuerraum eingedüst wird und bei dem das Umhüllungsmittel das Reaktionsmittel im Feuerraum wenigstens teilweise umhüllt und so das Reaktionsmittel zumindest teilweise vom Rauchgas abschirmt.

Die zuvor genannte Aufgabe ist auch bei einer Mehrstoffdüse gemäß dem Oberbegriff von Anspruch 8 dadurch gelöst, dass eine Umhüllungsmittelzuführung zur Zuführung eines Umhüllungsmittels vorgesehen ist, dass die Umhüllungsmittelzuführung in wenigstens einer außerhalb der Reaktionsmittelöffnung angeordneten Umhüllungsmittelöffnung mündet und dass die Reaktionsmittelöffnung und die Umhüllungsmittelöffnung so vorgesehen sind, dass das Umhüllungsmittel das Reaktionsmittel im Feuerraum zumindest teilweise vom Rauchgas abschirmt.

Letztlich wird die genannte Aufgabe ebenso bei einem Feuerraum nach dem Oberbegriff von Anspruch 12 dadurch gelöst, dass wenigstens eine Mehrstoffdüse nach einem der Ansprüche 8 bis 11 in wenigstens eine Wand des Feuerraums integriert ist.

Nachfolgend werden das Verfahren, die Mehrstoffdüse und der Feuerraum zusammen näher beschrieben, ohne immer im Einzelnen zwischen dem Verfahren und den Vorrichtungen zu unterscheiden, da dem Fachmann die bevorzugten Merkmale jeweils hinsichtlich des Verfahrens und der Vorrichtungen aus dem Kontext verständlich werden.

Die Erfindung hat grundsätzlich erkannt, dass die Eindringtiefe des Reaktionsmittels durch Verwendung eines Umhüllungsmittels gesteigert werden kann, da dieses das Reaktionsmittel vom Rauchgas wenigstens zunächst teilweise abschirmt. Es kommt daher zu einer verzögerten Vermischung mit dem Rauchgas im Feuerraum und im Falle eines flüssigen Reaktionsmittels zu einem verzögerten Verdampfen des Reaktionsmittels, insbesondere wenn das Umhüllungsmedium deutlich kühler ist als die Rauchgase.

Das Umhüllungsmittel unterscheidet sich somit grundsätzlich von einem bei einer Zweistoffdüse verwendeten Treibmittel, da das Treibmittel den Austritt des Reaktionsmittels und/oder dessen Verteilung unterstützt. Das aus der Mehrstoffdüse austretende Reaktionsmittel wird sich also sehr schnell mit dem Treibmittel vermischen, so dass sich ein Gemischstrahl bildet und keine nennenswerte Abschirmung des Reaktionsmittels vom Rauchgas erfolgt. Dabei kann das Treibmittel einen Sog für das austretende Reaktionsmittel bereitstellen und dieses letztlich mitreißen. Durch entsprechende Unterschiede hinsichtlich des Drucks und/oder der Geschwindigkeit zwischen dem Reaktionsmittel und dem Treibmittel wird das Reaktionsmittel fein verteilt bzw. zerstäubt, wenn das Reaktionsmittel flüssig ist. Im Falle eines flüssigen Reaktionsmittels wird vorzugsweise ein Spray aus Tröpfchen gebildet, die so fein sein können, dass sich ein Nebel bildet.

Damit das Umhüllungsmittel das Reaktionsmittel zumindest teilweise umhüllen kann, müssen die jeweils wenigstens eine Reaktionsmittelöffnung und Umhüllungsmittelöffnung in geeigneter Weise angeordnet werden. Besonders bevorzugt ist es, wenn die wenigstens eine Reaktionsmittelöffnung etwa mittig bzw. zentral, etwa zur wenigstens einen Umhüllungsmittelöffnung, vorgesehen ist. Deshalb wird der Einfachheit halber an den Begriffen zentral und außerhalb festgehalten, obwohl diese Begriffe grundsätzlich sehr breit verstanden werden können.

Bei einer ersten bevorzugten Ausgestaltung der Erfindung kann zusätzlich auch ein Treibmittel genutzt werden, um das Reaktionsmittel besser aus der Mehrstoffdüse auszutreiben und/oder im Feuerraum zu verteilen. Das Treibmittel bildet mit dem Reaktionsmittel wie zuvor beschrieben einen Gemischstrahl hoher Durchmischung aus. Der Gemischstrahl wird dann vom Umhüllungsmittel wenigstens teilweise umhüllt, so dass das Reaktionsmittel wenigstens teilweise vom Rauchgas abgeschirmt wird. Es können auf diese Weise die Vorteile der besseren Vermischung und Verteilung des Reaktionsmittels infolge des Treibmittels und der Abschirmung vom Rauchgas durch das Umhüllungsmittel kombiniert werden.

Das Treibmittel kann dabei mit dem Reaktionsmittel aus der Reaktionsmittelöffnung austreten. Dabei kann das Treibmittel bedarfsweise erst kurz vor dem Eintritt in den Feuerraum mit dem Reaktionsmittel zusammengeführt werden. Die Treibmittelzuführung kann das Treibmittel aber auch einer feuerraumseitigen Treibmittelöffnung zuführen, die außerhalb der Reaktionsmittelöffnung angeordnet ist, wobei die Umhüllungsöffnung außerhalb von der Treibmittelöffnung angeordnet ist. Besonders bevorzugt ist die wenigstens eine Treibmittelöffnung um die wenigstens eine Reaktionsmittelöffnung herum vorgesehen und ist die wenigstens eine Umhüllungsmittelöffnung um die wenigstens eine Treibmittelöffnung vorgesehen. Dies kann beispielsweise erreicht werden, wenn die Treibmittelöffnung ringförmig um die Reaktionsmittelöffnung herum verläuft, während die Umhüllungsmittelöffnung ringförmig um die Treibmittelöffnung herum verläuft. Die einzelnen Öffnungen brauchen dabei aber nicht zwingend kreisförmig bzw. rotationssymmetrisch zu sein. Es kommen etwa auch eckige oder ovale Querschnitte in Frage.

Die Reaktionsmittelöffnung und die Treibmittelöffnung müssen beide nicht zwingend direkt in den Feuerraum führen. Es kann also beispielsweise für den Fall, dass die Reaktionsmittelzuführung und die Treibmittelzuführung durch konzentrische Rohre gebildet werden, die Reaktionsmittelöffnung in Strömungsrichtung vor der Treibmittelöffnung vorgesehen sein, so dass bereits vor dem Eintritt in den Feuerraum eine Vermischung einsetzt und das Reaktionsmittel gemeinsam mit dem Treibmittel aus der Treibmittelöffnung in den Feuerraum strömt oder umgekehrt. Es kann aber auch vorgesehen sein, dass sich das Reaktionsmittel nach Austritt aus der Reaktionsmittelöffnung und das Treibmittel nach Austritt aus der Treibmittelöffnung zunächst zumindest teilweise vermischen und dann gemeinsam durch eine weitere Öffnung, die als Gemischstrahlöffnung bezeichnet werden kann, in den Feuerraum eintreten.

Bei Verwendung eines zusätzlichen Treibmittels kann letztlich eine Dreistoffdüse erhalten werden, die die Eindringtiefe etwa durch Steigerung des Impulses der Strömung weiter steigern kann.

Unter einem Reaktionsmittel wird grundsätzlich ein solches verstanden, das zur Verringerung des Anteils von unerwünschten Substanzen und/oder unerwünschte Reaktionen im Rauchgas beiträgt. Diese unerwünschten Substanzen können beispielsweise Stickoxide und Schwefelverbindungen sein. Unter unerwünschte Reaktionen fallen beispielsweise mineralische Umwandlungen bei der Aufheizung und der folgenden Erweichung der Brennstoffasche. Um den Schmelzpunkt der Asche zu modifizieren, können je nach Aschezusammensetzung bestimmte Mineralien zugeben werden. Die unerwünschten Reaktionen führen bedarfsweise zu unerwünschten Substanzen in Form von unerwünschten Reaktionsprodukten. Auch hierbei ist die Vermischung der Eindüsung mit dem Rauchgas und den darin befindlichen Aschpartikeln von großer Bedeutung für die Effektivität.

Vorzugsweise ist das Reaktionsmittel gasförmig, flüssig und/oder pulverförmig. Dabei wird ein etwaig verwendetes Transportfluid ebenso als Teil des Reaktionsmittels angesehen wie ein Lösungsmittel. Mit anderen Worten wird unter dem Reaktionsmittel nicht lediglich die aktive Komponente verstanden, sondern vielmehr der Stoff oder das Stoffgemisch, das mittels der Reaktionsmittelzuführung der Reaktionsmittelöffnung zugeführt wird. Unter einem Transportfluid, das gasförmig oder flüssig sein kann, wird letztlich ein Fluid angesehen, das lediglich dem Transport in den Feuerraum dient. Das Transportfluid ist insbesondere dann zweckmäßig, wenn ein Pulver eingedüst werden soll. Es kann sich dabei beispielsweise um Luft oder Wasser handeln. Ein Lösungsmittel, bei dem es sich um Wasser handeln kann, dient neben dem Transport in den Feuerraum der Aufnahme der aktiven Komponente des Reaktionsmittels.

Die aktive Komponente kann Ammoniak, Harnstoff oder eine andere stickstoffhaltige Verbindung sein, die vorzugsweise bei erhöhter Temperatur Ammoniak freisetzt und so zur SNCR genutzt werden kann. Es kann sich bei der aktiven Komponente, bei der es sich vorzugsweise um eine reaktive Komponente handelt, auch um ein Erdalkalimetall, z.B. Kalzium oder Magnesium, vorzugsweise in Form eines Oxids, Hydroxids und/oder Carbonats handeln. Dies ist insbesondere zur Entschwefelung von Vorteil. Dabei kommen auch in der Natur vorkommende Mischungen wie Dolomit oder Kalkstein in Frage. Beispielsweise zur Modifikation des Schmelzpunkts der vom Rauchgas mitgerissenen Asche können auch unterschiedliche Mineralien, die in Abhängigkeit der Asche des jeweilig eingesetzten Brennstoffes gezielt ausgewählt werden, als aktive Komponente des Reaktionsmittels verwendet werden. So kann beispielsweise ein unerwünscht niedriger Ascheschmelzpunkt vermieden werden.

Das Treibmittel kann mit einer größeren Geschwindigkeit als das Reaktionsmittel in den Feuerraum eingedüst werden, um die Vermischung und Verteilung des Reaktionsmittels zu verbessern. Alternativ oder zusätzlich kann das Umhüllungsmittel mit einer größeren Geschwindigkeit als die Geschwindigkeit des Gemischstrahls in den Feuerrum eingedüst werden, so dass das Umhüllungsmittel vermehrt den Gemischstrahl ansaugt. Es kann zweckmäßigerweise auch vorgesehen sein, dass die Austrittsgeschwindigkeit des Umhüllungsmittels größer ist als die entsprechende Relativgeschwindigkeit des Rauchgases in vertikaler Richtung. Dann wird auch vermehrt Rauchgas angesaugt, da die höhere Geschwindigkeit mit einem geringeren Druck einhergeht. Letztlich kann so eine allmähliche und gleichmäßige Vermischung zwischen dem Reaktionsmittel und dem Rauchgas erreicht werden.

Um Korrosion und Ablagerungen zu vermeiden, bietet es sich an, wenn das Reaktionsmittel über wenigstens eine Mehrstoffwanddüse in den Feuerraum eingedüst wird. Die Mehrstoffdüse ist also in die Wand des Feuerraums integriert. Es könnten aber auch mehrere Mehrstoffdüsen in derselben Wand oder in unterschiedlichen Wänden vorgesehen sein. Die Mehrstoffdüsen können dabei einander gegenüberliegend oder versetzt zueinander angeordnet sein. Es ist jedoch auch nicht grundsätzlich ausgeschlossen, dass die Mehrstoffdüse an einer Lanze oder einem Düsenstock in der Rauchgasströmung, also im Feuerraum, platziert wird, auch wenn dies grundsätzlich weniger bevorzugt sein wird.

Um das Reaktionsmittel auch über den Querschnitt von großen Dampferzeugern gleichmäßig verteilen zu können, kann das Reaktionsmittel über mehrere Mehrstoffdüsen auf wenigstens einer Ebene des Feuerraums eingedüst werden. Dabei können die Mehrstoffdüsen so ausgerichtet werden, dass das Reaktionsmittel tangential zu einem Mittelkreis in der Ebene eingedüst wird, um eine gute Durchmischung und eine gleichmäßige Temperaturverteilung zu erreichen. Dies ist insbesondere dann von Vorteil, wenn eine Tangentialfeuerung im Feuerraum vorgesehen ist, bei der die Brenner ebenfalls tangential zu einem Mittelkreis in der Brennerebene ausgerichtet sind. Die Mehrstoffdüsen können dabei gleichsinnig oder gegensinnig zu den Brennerdüsen ausgerichtet sein, um eine gleichsinnig oder gegensinnig rotierende Strömung zu erzeugen. Wenn durch das Umhüllungsmittel ein hoher Impulsstrom erzeugt wird, kann es vorteilhaft sein, wenn die Drehrichtungen der Feuerung bzw. Brenner und der Mehrstoffdüsenanordnung entgegengesetzt sind.

Das Umhüllungsmittel kann gasförmig und/oder flüssig sein. Zur Verzögerung des Verdampfens des Reaktionsmittels sollte das Umhüllungsmittel zudem kälter als das Rauchgas sein. Grundsätzlich kann es sich der Einfachheit des Verfahrens halber um Rauchgas, Dampf, Wasser, Brüdengase und/oder Luft und/oder eine Mischung dieser Medien handeln. Wenn das Umhüllungsmittel einen Anteil an Flüssigkeit, wie etwa Wasser, und/oder Dampf, wie etwa Wasserdampf, aufweist, kann das die Energiebilanz oder die Verzögerung der Verdampfung des Reaktionsmittels begünstigen.

Damit kein zusätzliches Medium bereitgestellt werden muss bzw. ohnehin vorhandene Medien genutzt werden können, die unter Umständen dem Feuerraum ohnehin zugeführt werden müssen, bietet sich als Umhüllungsmittel ein sogenanntes prozesseigenes Fluid an. Prozesseigene Fluide sind solche, die im Prozess der Dampferzeugung oder angeschlossener Prozesse zur Verfügung stehen. Es kann sich also etwa um Rauchgas handeln, das beispielsweise vor oder nach einem Luftvorwärmer oder aber nach der Entstaubung entnommen wird. Es kann sich auch um Verbrennungsluft handeln, die nach dem Frischlüfter, vor oder nach dem Luftvorwärmer entnommen wird. Es kann sich bei der Luft auch um einen Teil der Primärluft einer Mühle zum Zerkleinern des Brennstoffs für die Feuerung handeln. Es kann sich auch um Prozessdampf, etwa aus einer Niederdruck, Mitteldruck oder Hochdruckschiene, oder um Brüden handeln, etwa aus einer Brennstofftrocknung. Sofern zweckmäßiger Weise Wasser als Umhüllungsmedium oder als Teil des Umhüllungsmediums verwendet wird, kann es sich um Speisewasser oder um Kondensat handeln.

Strömungstechnisch günstig ist es, wenn die Reaktionsmittelöffnung, die Treibmittelöffnung und/oder die Umhüllungsmittelöffnung konzentrisch zueinander ausgebildet sind. Dabei können eine Reaktionsmittelöffnung oder mehrere Reaktionsmittelöffnungen zentral vorgesehen sein. Konzentrisch um diese herum, können dann eine Treibmittelöffnung und/oder mehrere Treibmittelöffnungen vorgesehen sein. Konzentrisch zur wenigstens einen Reaktionsmittelöffnung und/oder wenigstens einen Treibmittelöffnung kann zudem eine Umhüllungsmittelöffnung oder mehrere Umhüllungsmittelöffnungen vorgesehen sein. Besonders bevorzugt ist es jedoch, wenn eine Reaktionsmittelöffnung zentral vorgesehen ist, die konzentrisch von einer Ringöffnung für das Treibmittel umfasst ist. Konzentrisch dazu kann wieder eine Ringöffnung für das Umhüllungsmittel vorgesehen sein. Dies ist apparativ einfacher auszuführen.

Zur gezielten Vermischung von Reaktionsmittel, Treibmittel und Umhüllungsmittel kann die Reaktionsmittelzuführung und/oder die Treibmittelzuführung feuerraumseitig eine düsenförmige Querschnittsverjüngung aufweisen. Alternativ oder zusätzlich kann aus dem gleichen Grund die Umhüllungsmittelzuführung feuerraumseitig eine Querschnittserweiterung aufweisen.

Apparativ einfach ist es, wenn die wenigstens eine Mehrstoffdüse als Mehrstoffwanddüse in einer Wand des Feuerraums angeordnet ist, statt die Düse über eine Lanze zu versorgen und im Feuerraum zu platzieren.

Eine besonders gleichmäßige Vermischung lässt sich im Feuerraum erreichen, wenn eine Mehrzahl von Mehrstoffdüsen auf wenigstens einer Ebene vorgesehen ist. Dabei kann es weiter bevorzugt sein, wenn diese Ebene in Rauchgasrichtung zwischen den Brennern und den Wärmetauschern zur Dampferzeugung vorgesehen ist. Dort kann die Temperatur zufriedenstellend sein. Außerdem kann eine sich etwa günstig auf die Korrosion auswirkende Behandlung des Rauchgases erreicht werden, bevor dieses mit den Wärmetauschern in Kontakt kommt.

Insbesondere wenn die Rauchgase etwa vertikal von unten nach oben strömen, ist es aus Gründen der Vermischung zweckmäßig, wenn die wenigstens eine Mehrstoffdüse so vorgesehen ist, dass das Reaktionsmittel im Wesentlichen horizontal in den Feuerraum eingedüst wird. Besonders zweckmäßig ist es dabei, wenn der Winkel der Eindüsung variiert werden kann, etwa um auf unterschiedliche Betriebszustände reagieren zu können. Dies kann etwa erfolgen, indem die wenigstens eine Mehrstoffdüse gegenüber der Vertikalen geneigt werden kann. Kann die wenigstens eine Mehrstoffdüse alternativ oder zusätzlich gegenüber der Horizontalen geneigt werden, kann dadurch die Strömung im Feuerraum in eine mehr oder weniger starke Rotation versetzt werden.

Nachfolgend wird die Erfindung anhand einer lediglich Ausführungsbeispiele darstellenden Zeichnung näher erläutert. In der Zeichnung zeigt
- Fig. 1: eine erfindungsgemäße Mehrstoffdüse in einer Wand eines ersten erfindungsgemäßen Feuerraums eines Dampferzeugers in einer vertikalen Schnittansicht,
- Fig. 2: den Feuerraum aus Fig. 1 in einer vertikalen Schnittansicht,
- Fig. 3: einen zweiten erfindungsgemäßen Feuerraum in einer horizontalen Schnittansicht und
- Fig. 4: einen dritten erfindungsgemäßen Feuerraum in einer horizontalen Schnittansicht.

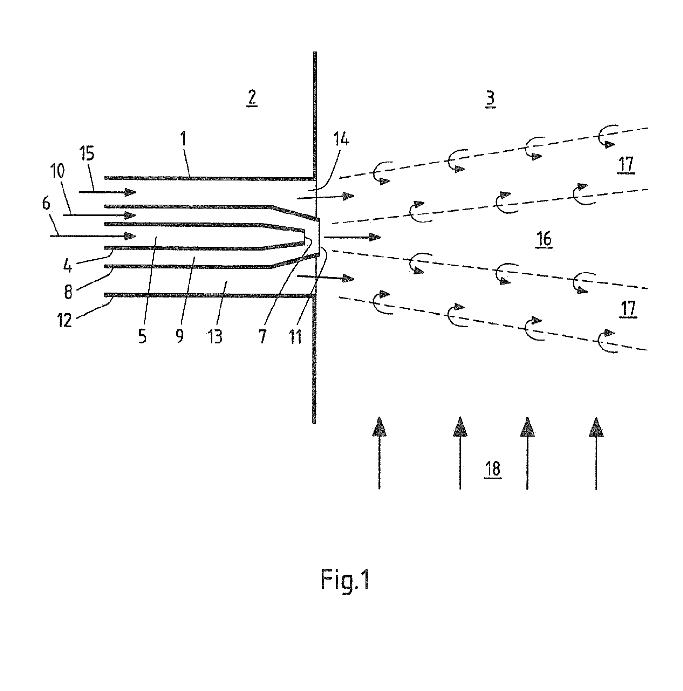

In der Fig. 1 ist eine Mehrstoffdüse 1 in einer Wand 2 eines Feuerraums 3 dargestellt. Die Mehrstoffdüse 1 weist ein zentral angeordnetes Reaktionsmittelrohr 4 auf, das als Reaktionsmittelzuführung 5 für das Reaktionsmittel 6 dient, die in einer feuerraumseitigen Reaktionsmittelöffnung 7 endet. Das zentrale Reaktionsmittelrohr 4 ist in einem konzentrischen Treibmittelrohr 8 größeren Durchmessers aufgenommen, das zusammen mit dem Reaktionsmittelrohr 4 die Treibmittelzuführung 9 bildet. Das Treibmittel 10 wird in dem Zwischenraum zwischen den konzentrischen Rohren zur feuerraumseitigen Treibmittelöffnung 11 geführt. Die beiden inneren Rohre werden von einem ebenfalls konzentrischen äußeren Umhüllungsmittelrohr 12 umfasst, das mit dem Treibmittelrohr 8 die Umhüllungsmittelzuführung 13 und eine feuerraumseitige Umhüllungsmittelöffnung 14 für den Austritt von Umhüllungsmittel 15 bildet. Das Reaktionsmittelrohr 4, das Treibmittelrohr 8 und das Umhüllungsmittelrohr 12 weisen kreisförmige Querschnitte auf, obwohl grundsätzlich auch andere Querschnitte denkbar sind.

Die in der Fig. 1 dargestellte Mehrstoffdüse umfasst exemplarisch und schematisch eine Reaktionsmitteldüse und eine Treibmitteldüse. Prinzipiell lassen sich hierfür die aus dem Stand der Technik bekannten Zweistoffdüsen oder andere Düsenbauarten verwenden.

Die Reaktionsmittelöffnung 7 ist bei der dargestellten und insoweit bevorzugten Mehrstoffdüse 1 in Strömungsrichtung des Reaktionsmittels 6 vor der Treibmittelöffnung 11 vorgesehen, so dass das Reaktionsmittel 6 zunächst mit dem Treibmittel 10 in der Treibmittelzuführung 9 vermischt wird und einen Gemischstrahl 16 bildet, der durch die Treibmittelöffnung 11 in den Feuerraum 3 eindringt. Bei Verwendung eines flüssigen Reaktionsmittels 6 und eines gasförmigen Treibmittels 10 kommt es in Strömungsrichtung nach der Reaktionsmittelöffnung 7 zum Vernebeln des Reaktionsmittels 6. Das Reaktionsmittel 6 kann beispielsweise auch eine Mischung aus einem Pulver und einem Transportgas sein. Das Pulver wird dann nach dem Verlassen der Reaktionsmittelöffnung 7 durch das Treibmittel 10 weiter verwirbelt.

Im Feuerraum 3 vermischen sich das Reaktionsmittel 6 und das Treibmittel 10 weiter, was der relativ höheren Geschwindigkeit des Treibmittels 10 geschuldet ist. Dies wird noch unterstützt durch die Verjüngung der Strömungsquerschnitte der Reaktionsmittelzuführung 5 und der Treibmittelzuführung 9, und zwar vor der Reaktionsmittelöffnung 7 und der Treibmittelöffnung 11. Da das Umhüllungsmittelrohr 12 seinen Querschnitt feuerraumseitig nicht verändert, ergibt sich bei der dargestellten und insoweit bevorzugten Mehrstoffdüse 1 eine Aufweitung des Strömungsquerschnitts der Umhüllungsmittelzuführung 13.

In Fig. 1 sind der Strömungsbereich des Gemischstrahls 16, der im Wesentlichen aus Reaktionsmittel 6 und Treibmittel 10 gebildet wird, und der Strömungsbereich der Umhüllungsströmung 17, der im Wesentlichen aus Umhüllungsmittel 15 gebildet wird, durch gestrichelte Linien dargestellt. Der Strömungsbereich der Umhüllungsströmung 17 umhüllt den Gemischstrahl 16 in einem Querschnitt senkrecht zur Strömungsrichtung gesehen vollständig. Da die Umhüllungsströmung 17 eine höhere Geschwindigkeit als der Gemischstrahl 16 und als das Rauchgas 18 aufweist, saugt die Umhüllungsströmung 17 zunehmend Gemisch und Rauchgas 18 an, was durch die dargestellten Pfeile verdeutlich wird. Diese Vermischung führt zu einem allmählichen Kontakt zwischen Reaktionsmittel 6 und Rauchgas 18 entlang des Strahls, so dass der Strahl bis weit in den Feuerraum 3 hinein ragt. Im Falle eines flüssigen Reaktionsmittels 6 wird dieses folglich langsam verdampft, so dass es auch noch weit im Feuerraum 3 zu einer Wechselwirkung oder Reaktion zwischen dem Reaktionsmittel 6 und dem Rauchgas 18 kommt. Ohne das Umhüllungsmittel 15 würde der Gemischstrahl 16 sofort mit dem heißen Rauchgas 18 in Kontakt kommen und im Falle eines flüssigen Reaktionsmittels 6 sofort verdampfen.

Zudem vergrößert das Umhüllungsmittel 15 den Impuls des gesamten Strahls, ohne die Tröpfchengröße stark zu verringern. Dies führt zu einer Vergrößerung der Eindringtiefe des Reaktionsmittels 6 in den Feuerraum 3 und zu einer weiteren Durchmischung des Rauchgases 18, was die darin ablaufenden Reaktionen begünstigt. Das Rauchgas 18 strömt beim dargestellten und insoweit bevorzugten Feuerraum 3 vertikal von unten nach oben, während das Reaktionsmittel 6 horizontal in den Feuerraum 3 eingedüst wird.

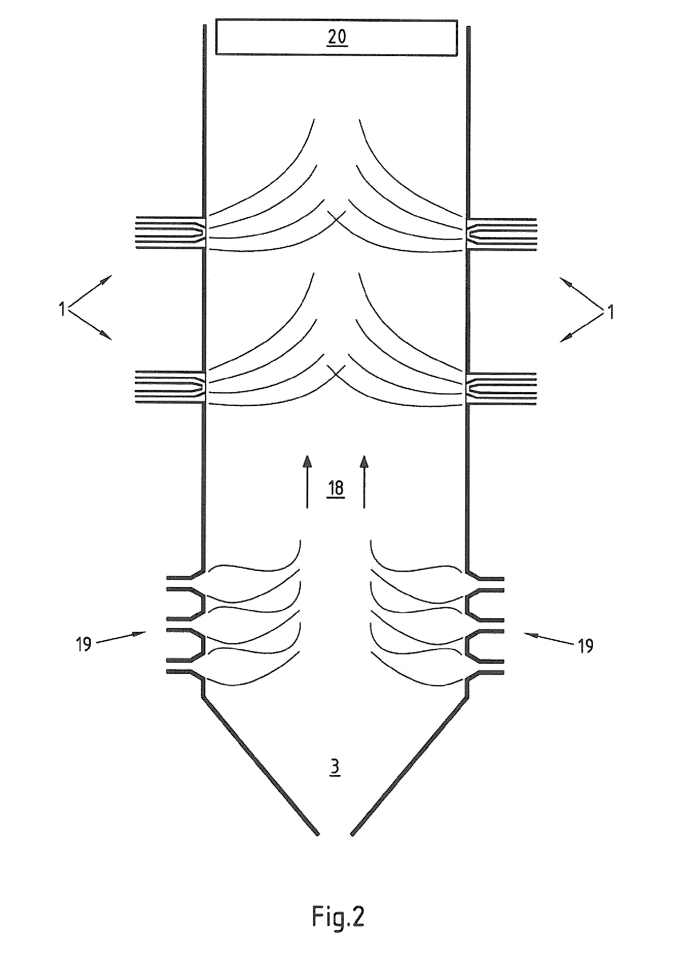

In der Fig. 2 ist die Anordnung der Mehrstoffdüsen 1 im Feuerraum 3 dargestellt. Im unteren Bereich des Feuerraums 3 sind die Brenner 19 desselben vorgesehen. Die mit den Brennern 19 erzeugten Rauchgase 18 wandern nach oben, wo zwei Ebenen von Mehrstoffdüsen 1 vorgesehen sind, welche jeweils horizontal eine Gemischströmung 16 und eine Umhüllungsströmung 17 in den Feuerraum 3 eindüsen. Die Strömungen reichen bis in den zentralen Bereich des Feuerraums 3, wobei jedoch von der Wand 2 bis in den zentralen Bereich eine zunehmende Vermischung des Gemischstrahls 16 und der Umhüllungsströmung 17 untereinander und mit dem Rauchgas 18 erfolgt. Die in Fig. 2 dargestellten zwei Ebenen der Mehrstoffdüsen 1 sind bevorzugt aber nicht zwingend. Es können auch mehr oder weniger Ebenen vorgesehen sein. Die einzelnen Ebenen können zudem etwa in Abhängigkeit des Temperaturprofils im Feuerraum 3 einzeln aktiviert und deaktiviert werden. In einem Abstand oberhalb der beiden Ebenen, der eine ausreichende Reaktion des Reaktionsmittels 6 mit dem Rauchgas 18 ermöglicht, ist ein Wärmetauscher 20 vorgesehen, der dem Rauchgas 18 Wärme entzieht und dabei Dampf erzeugt.

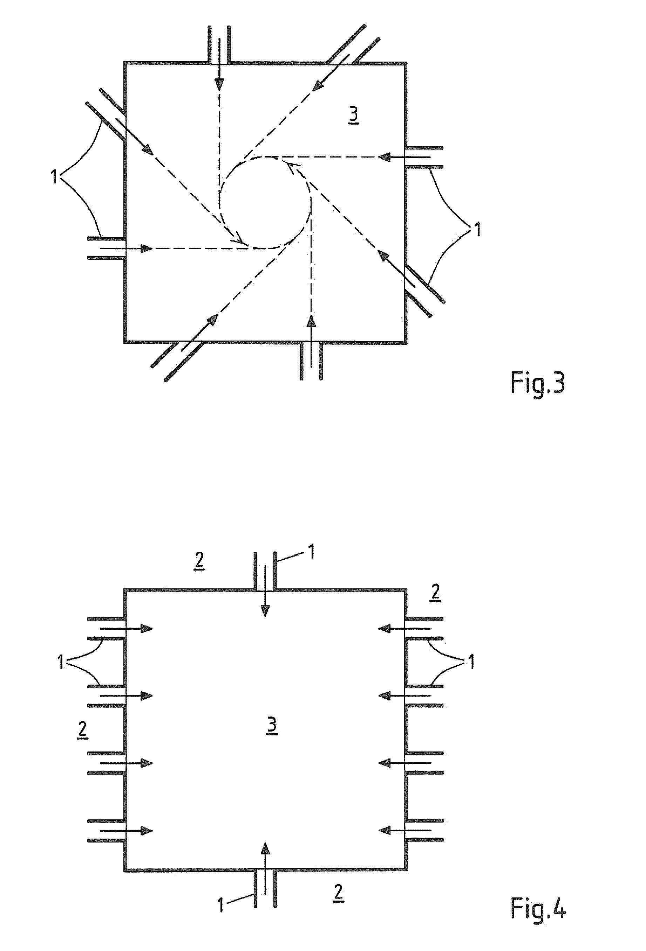

In der Fig. 3 ist die Anordnung von Mehrstoffdüsen 1 in einem anderen Feuerraum 3 dargestellt. Die Mehrstoffdüsen 1 sind alle tangential zu einem virtuellen Kreis in der Mitte des Feuerraumquerschnitts ausgerichtet. Diese Anordnung der Mehrstoffdüsen 1 bewirkt beim dargestellten und insoweit bevorzugten Feuerraum 3 eine Rotation des Rauchgases. Die gleiche Rotation wird durch die gleiche Ausrichtung der Brenner erreicht. Man spricht dabei von einer Tangentialfeuerung.

In der Fig. 4 ist eine alternative Ausrichtung der Mehrstoffdüsen 1 einer Ebene eines Feuerraums 3 dargestellt. Die Mehrstoffdüsen 1 sind an jeweils gegenüberliegenden Wänden 2 einander jeweils gegenüber angeordnet. Alternativ könnten die Mehrstoffdüsen an einander gegenüberliegenden Wänden 2 horizontal versetzt zueinander angeordnet sein. Auch kann nur eine Wand 2 oder zwei gegenüberliegende Wände 2 eine oder mehrere Mehrstoffdüsen 1 aufweisen.

## Patentansprüche

1. Verfahren zur Reduktion unerwünschter Substanzen durch Eindüsen eines Reaktionsmittels in ein Rauchgas (18) eines Dampferzeugers, bei dem das Reaktionsmittel (6) über eine Reaktionsmittelöffnung (7) einer Mehrstoffdüse (1) in den Feuerraum (3) des Dampferzeugers eingedüst wird, bei dem durch wenigstens eine außerhalb der Reaktionsmittelöffnung (7) angeordnete Umhüllungsmittelöffnung (14) ein Umhüllungsmittel (15) in den Feuerraum (3) eingedüst wird und bei dem das Umhüllungsmittel (15) das Reaktionsmittel (6) im Feuerraum (3) wenigstens teilweise umhüllt und so das Reaktionsmittel (6) zumindest teilweise vom Rauchgas (18) abschirmt.

2. Verfahren nach Anspruch 1,
bei dem ein Treibmittel (10) eingedüst wird und bei dem das Treibmittel (10) das Eindüsen und/oder das Verteilen des Reaktionsmittels (6) unterstützt, bei dem das Reaktionsmittel (6) und das Treibmittel (10) im Feuerraum (3) einen Gemischstrahl (16) bilden und bei dem das Umhüllungsmittel (15) den Gemischstrahl (16) im Feuerraum wenigstens teilweise umhüllt und so das Reaktionsmittel (6) zumindest teilweise vom Rauchgas (18) abschirmt.

3. Verfahren nach Anspruch 1 oder 2,
bei dem durch wenigstens eine außerhalb der Reaktionsmittelöffnung (7) angeordnete Treibmittelöffnung (11) ein Treibmittel (10) in den Feuerraum (3) eingedüst wird und/oder bei dem das Reaktionsmittel (6) gasförmig, flüssig und/oder pulverförmig, vorzugsweise mit einem Transportfluid, in den Feuerraum (3) eingedüst wird.

4. Verfahren nach einem der Ansprüche 1 bis 3,
bei dem das Reaktionsmittel (6) als aktive Komponente Ammoniak, Harnstoff, andere stickstoffhaltige Verbindungen, Erdalkalimetalle, vorzugsweise in Form von Oxiden, Hydroxiden und/oder Carbonaten, enthält.

5. Verfahren nach einem der Ansprüche 1 bis 4,
bei dem das Treibmittel (10) mit einer größeren Geschwindigkeit als das Reaktionsmittel (6) in den Feuerraum (3) eingedüst wird und/oder bei dem das Umhüllungsmittel (15) mit einer größeren Geschwindigkeit als die Geschwindigkeit des Gemischstrahls (16) in den Feuerraum (3) eingedüst wird.

6. Verfahren nach einem der Ansprüche 1 bis 5,
bei dem das Reaktionsmittel (6) über wenigstens eine in wenigstens einer Wand (2) des Feuerraums (3) angeordnete Mehrstoffwanddüse in den Feuerraum (3) eingedüst wird und/oder bei dem als Umhüllungsmittel (15) Rauchgas, Dampf, Wasser, Brüdengase, ein prozesseigenes Fluid und/oder Luft verwendet wird.

7. Verfahren nach einem der Ansprüche 1 bis 6,
bei dem das Reaktionsmittel (6) über mehrere Mehrstoffdüsen (1) auf wenigstens einer Ebene des Feuerraums (3), vorzugsweise jeweils tangential zu einem Mittelkreis der Ebene, eingedüst wird.

8. Mehrstoffdüse (1) für das Eindüsen von Reaktionsmittel (6) in einen Feuerraum (3) eines Dampferzeugers zur Reduktion unerwünschter Substanzen im Rauchgas (18), mit einer Reaktionsmittelzuführung (5) zur Zuführung eines Reaktionsmittels (6), wobei feuerraumseitig die Reaktionsmittelzuführung (5) in eine Reaktionsmittelöffnung (7) mündet, **dadurch gekennzeichnet, dass** eine Umhüllungsmittelzuführung (13) zur Zuführung eines Umhüllungsmittels (15) vorgesehen ist, dass die Umhüllungsmittelzuführung (13) in wenigstens eine außerhalb der Reaktionsmittelöffnung (5) angeordneten Umhüllungsmittelöffnung (14) mündet und dass die Reaktionsmittelöffnung (7) und die Umhüllungsmittelöffnung (14) so vorgesehen sind, dass das Umhüllungsmittel (15) das Reaktionsmittel (6) im Feuerraum (3) zumindest teilweise vom Rauchgas (18) abschirmt.

9. Mehrstoffdüse nach Anspruch 8,
**dadurch gekennzeichnet, dass** eine Treibmittelzuführung (9) zur Zuführung eines der Eindüsung und/oder Verteilung des Reaktionsmittels (6) dienenden Treibmittels (10) vorgesehen ist.

10. Mehrstoffdüse nach Anspruch 9,
**dadurch gekennzeichnet, dass** feuerraumseitig die Treibmittelzuführung (9) in wenigstens einer außerhalb der Reaktionsmittelöffnung (7) angeordneten Treibmittelöffnung (11) mündet und dass die Umhüllungsmittelzuführung (13) in wenigstens einer außerhalb der Treibmittelöffnung (11) angeordneten Umhüllungsmittelöffnung (14) mündet.

11. Mehrstoffdüse nach einem der Ansprüche 8 bis 10,
**dadurch gekennzeichnet, dass** die Reaktionsmittelöffnung (7), die Treibmittelöffnung (11) und die Umhüllungsmittelöffnung (14) konzentrisch zueinander ausgebildet sind und/oder dass die Mehrstoffdüse (1) als Mehrstoffwanddüse in einer Wand (2) des Feuerraums (3) angeordnet ist.

12. Feuerraum eines Dampferzeugers,
**dadurch gekennzeichnet, dass** wenigstens eine Mehrstoffdüse (1) nach einem der Ansprüche 8 bis 11 vorgesehen ist.

13. Feuerraum nach Anspruch 12,
**dadurch gekennzeichnet, dass** die Mehrstoffdüse (1) in wenigstens eine Wand (2) des Feuerraums (3) integriert ist.

14. Feuerraum nach Anspruch 12 oder 13,
**dadurch gekennzeichnet, dass** eine Mehrzahl von Mehrstoffdüsen (1) nach einem der Ansprüche 10 bis 12 auf wenigstens einer Ebene vorgesehen ist und dass, vorzugsweise, die Ebene in Rauchgasrichtung zwischen den Brennern (19) und den Wärmetauschern (20) zur Dampferzeugung vorgesehen ist.

15. Feuerraum nach einem der Ansprüche 12 bis 14,
**dadurch gekennzeichnet, dass** die wenigstens eine Mehrstoffdüse (1) so vorgesehen ist, dass das Reaktionsmittel (6) im Wesentlichen horizontal in den Feuerraum (3) eingedüst wird.
